# EUROPEAN PATENT APPLICATION

(11) **EP 4 266 244 A1**
(43) Date of publication of application: **25.10.2023**
(21) Application number: 21905842.7
(22) Date of filing: 17.12.2021
(51) Int. Cl.: G06T 7/00

(54) **SURFACE DEFECT DETECTION METHOD, APPARATUS, SYSTEM, STORAGE MEDIUM, AND PROGRAM PRODUCT**

(30) Priority: 17.12.2020 CN 202011495050
(71) Applicant: Hangzhou Hikvision Digital Technology Co., Ltd., Hangzhou, Zhejiang 310051 (CN)
(72) Inventor: ZHANG, Yingying, Hangzhou, Zhejiang 310051 (CN); ZHONG, Qiaoyong, Hangzhou, Zhejiang 310051 (CN); XIE, Di, Hangzhou, Zhejiang 310051 (CN); PU, Shiliang, Hangzhou, Zhejiang 310051 (CN)
(74) Representative: Vogelbruch, Keang
(86) International application number: PCT/CN2021/139333
(87) International publication number: WO 2022/127919

(57) **Abstract**

Embodiments of the present disclosure discloses a surface defect detection method, device, system, storage medium, and program product, belonging to the field of deep learning technology. In the embodiments of the present disclosure, if it is detected and determined through a neural network defect segmentation model that there are no surface defects of known types in the to-be-detected image, the image features of the to-be-0+22 image is extracted through the neural network defect feature extraction model, to obtain the to-be-compared features. If the similarity between the to-be-compared features and the normal data representation features is small, it is determined that there is a surface defect of an unknown type in the to-be-detected image, that is, the embodiments of the present disclosure can detect surface defects of unknown defect types, improving the accuracy of detection.

## Description

The present application claims the priority of the Chinese patent application with application number "202011495050.3" and title "SURFACE DEFECT DETECTION METHOD, DEVICE AND SYSTEM" filed on December 17, 2020, all contents of which are incorporated by reference into the present application.

### TECHNICAL FIELD

The present disclosure relates to the technical field of deep learning technology, in particular to surface defect detection methods, devices, and systems, storage mediums, and program products.

### BACKGROUND

A surface defect refers to a defect on the appearance of an object. Surface defects have the characteristics of a wide variety, diverse shapes, unstable positions, and diverse background textures. Surface defect detection is an important part for quality control in the industrial field, and higher accuracy of surface defect detection is required.

In related technologies, by deep learning neural networks, only surface defects of known defect types can be detected, but new types of defects (i.e., surface defects of unknown defect types) encountered in actual detection, cannot be effectively detected.

### SUMMARY

In the embodiments of the present disclosure, a surface defect detection method, device, and system, a storage medium, and a program product are provided, which can detect surface defects of unknown defect types, improving the accuracy of detection. The technical solution is as follows.

In an aspect, a surface defect detection method is provided, including: obtaining a to-be-detected image; inputting the to-be-detected image into a neural network defect segmentation model, to obtain a first detection result, where the neural network defect segmentation model is configured to detect a surface defect of a known defect type; in response to determining that the first detection result indicates that the to-be-detected image does not have a surface defect of the known defect type, inputting the to-be-detected image into a neural network defect feature extraction model, to obtain to-be-compared features, where the to-be-compared features are image features of the to-be-detected image; in response to determining that a similarity between the to-be-compared features and normal data representation features is less than a similarity threshold, determining that the to-be-detected image has a surface defect of an unknown defect type, where the normal data representation features are generated based on image features of an image without surface defects.

In some embodiments, after determining that the to-be-detected image has a surface defect of the unknown defect type, the method further includes: according to the similarity between the to-be-compared features and the normal data representation features and a mapping relationship between an image feature matrix and an image pixel matrix, determining a location of the surface defect present in the to-be-detected image.

In some embodiments, before inputting the to-be-detected image into the neural network defect segmentation model, to obtain the first detection result, the method further includes: obtaining a first dataset, where the first dataset includes an defective image of an known defect type and corresponding first label information, the first label information indicates a defect type, the first dataset further includes an image without surface defects and corresponding second label information, and the second label information indicates absence of surface defects; and according to the first dataset, training the neural network defect segmentation model.

In some embodiments, before inputting the to-be-detected image into the neural network defect feature extraction model, to obtain the to-be-compared features, the method further includes: obtaining a second dataset, where the second dataset includes an image of a known object type and corresponding third label information, and the third label information indicates an object type; and according to the second dataset, training the neural network defect feature extraction model.

In some embodiments, before, in response to determining that the similarity between the to-be-compared features and the normal data representation features is less than the similarity threshold, determining that the to-be-detected image has the surface defect of the unknown defect type, the method further includes: obtaining at least one first sample image, where the at least one first sample image has no surface defects; inputting the at least one first sample image into the neural network defect feature extraction model, to obtain image features of the at least one first sample image; and taking the image features of the at least one first sample image as the normal data representation features.

In some embodiments, before, in response to determining that the similarity between the to-be-compared features and the normal data representation features is less than the similarity threshold, determining that the to-be-detected image has the surface defect of the unknown defect type, the method further includes: obtaining multiple second sample images, where the multiple second images have no surface defects; inputting the multiple second sample image into the neural network defect feature extraction model, to obtain image features of the multiple second sample image; clustering the image features of the multiple second sample images, to obtain multiple sets of normal data features; and selecting at least one image feature from each set of normal data features of the multiple sets of normal data features, to obtain the normal data representation features.

In some embodiments, after inputting the to-be-detected image into the neural network defect feature extraction model, to obtain the to-be-compared features, the method further includes: in response to determining that the similarity between the to-be-compared features and the normal data representation features is greater than or equal to the similarity threshold, determining that the to-be-detected image has no surface defects.

In an aspect, a surface defect detection apparatus is provided, including: a first obtaining module, configured to obtain a to-be-detected image; a detecting module, configured to input the to-be-detected image into a neural network defect segmentation model, to obtain a first detection result, where the neural network defect segmentation model is configured to detect a surface defect of a known defect type; a first processing module, configured to, in response to determining that the first detection result indicates that the to-be-detected image does not have a surface defect of the known defect type, input the to-be-detected image into a neural network defect feature extraction model, to obtain to-be-compared features, where the to-be-compared features are image features of the to-be-detected image; and a first determining module, configured to, in response to determining that a similarity between the to-be-compared features and normal data representation features is less than a similarity threshold, determine that the to-be-detected image has a surface defect of an unknown defect type, where the normal data representation features are generated based on image features of an image without surface defects.

In some embodiments, the apparatus further including: a second determining module, configured to, according to the similarity between the to-be-compared features and the normal data representation features and a mapping relationship between an image feature matrix and an image pixel matrix, determine a location of the surface defect present in the to-be-detected image.

In some embodiments, the apparatus further including: a second obtaining module, configured to obtain a first dataset, where the first dataset includes an defective image of an known defect type and corresponding first label information, the first label information indicates a defect type, the first dataset further includes an image without surface defects and corresponding second label information, and the second label information indicates absence of surface defects; and a first training module, configured to, according to the first dataset, train the neural network defect segmentation model.

In some embodiments, the apparatus further including: a third obtaining module, configured to obtain a second dataset, where the second dataset includes an image of a known object type and corresponding third label information, and the third label information indicates an object type; a second training module, configured to train a neural network defect feature extraction model based on the second dataset.

In some embodiments, the apparatus further including: a fourth obtaining module, configured to obtain at least one first sample image without surface defects; a second processing module, configured to input the at least one first sample image into the neural network defect feature extraction model, to obtain image features of the at least one first sample image; and a third determining module, configured to determine the image features of the at The least one first sample image as the normal data representation features.

In some embodiments, the apparatus further including: a fifth obtaining module, configured to obtain multiple second sample images, where the multiple second images have no surface defects; a third processing module, configured to input the multiple second sample image into the neural network defect feature extraction model, to obtain image features of the multiple second sample image; a clustering module, configured to cluster the image features of the multiple second sample images, to obtain multiple sets of normal data features; and a fourth determining module, configured to select at least one image feature from each set of normal data features of the multiple sets of normal data features, to obtain the normal data representation features.

In some embodiments, the apparatus further including: a fifth determining module, configured to, in response to determining that the similarity between the to-be-compared features and the normal data representation features is greater than or equal to the similarity threshold, determine that the image to the be detected has no surface defects.

In an aspect, a surface defect detection system is provided, including a camera and at least one processor; where the camera is configured to capture at least one surface of an object to be detected, to obtain a to-be-detected image; and the at least one processor is configured to obtain the to-be-detected image, and realize the steps of the above surface defect detection method.

In some embodiments, the surface defect detection system further includes a transfer device for transferring the object to be detected; where the camera is configured to capture the object to be detected during a process of the object to be detected being transferred by the transfer device.

In an aspect, a computer device is provided, including a processor, a communication interface, a memory, and a communication bus, where the processor, the communication interface, and the memory realize mutual communication through the communication bus, the memory is configured to store computer programs, and the processor is configured to execute the programs stored in the memory, to realize steps of the above surface defect detection method.

In an aspect, a computer-readable storage medium is provided, where a computer program is stored in the computer-readable storage medium, and when the computer program is executed by a processor, steps of the above surface defect detection method are realized.

In an aspect, a computer program product containing instructions is provided, where when the computer program product runs on a computer, the computer program product cause the computer to execute steps of the above surface defect detection method.

The technical solutions provided by the embodiments of the present disclosure can bring at least the following beneficial effects.

In the embodiments of the present disclosure, if it is detected and determined through a neural network defect segmentation model that there are no surface defects of known types in the to-be-detected image, the image features of the to-be-detected image is extracted through the neural network defect feature extraction model, to obtain the to-be-compared features. If the similarity between the to-be-compared features and the normal data representation features is small, it is determined that there is a surface defect of an unknown type in the to-be-detected image, that is, the embodiments of the present disclosure can detect surface defects of unknown defect types, improving the accuracy of detection.

### BRIEF DESCRIPTION OF DRAWINGS

In order to more clearly illustrate the technical solutions according to the embodiments of the present disclosure, drawings that need to be used in the description of the embodiments will be briefly introduced below. The drawings in the following description only relate to some embodiments of the present application. For those skilled in the art, other drawings can also be obtained based on these drawings without inventive effort.
FIG. 1 is a system architecture diagram of a surface defect detection system according to an embodiment of the present disclosure.
FIG. 2 is a flowchart of a surface defect detection method according to an embodiment of the present disclosure.
FIG. 3 is a flowchart of a surface defect detection method according to another embodiment of the present disclosure.
FIG. 4 is a schematic diagram of a detection model training method according to an embodiment of the present disclosure.
FIG. 5 is a schematic diagram of a normal data feature modelling method according to an embodiment of the present disclosure.
FIG. 6 is a structural schematic diagram of a surface defect detection apparatus according to an embodiment of the present disclosure.
FIG. 7 is a structural schematic diagram of a terminal according to an embodiment of the present disclosure.
FIG. 8 is a structural schematic diagram of a server according to an embodiment of the present disclosure.

### DETAILED DESCRIPTION

In order to clarify purposes, technical solutions, and advantages of the embodiments of the present disclosure, further detailed descriptions of the embodiments of the present disclosure are provided below in conjunction with the accompanying drawings.

Firstly, a system architecture involved in the surface defect detection method according to an embodiment of the present disclosure is introduced.

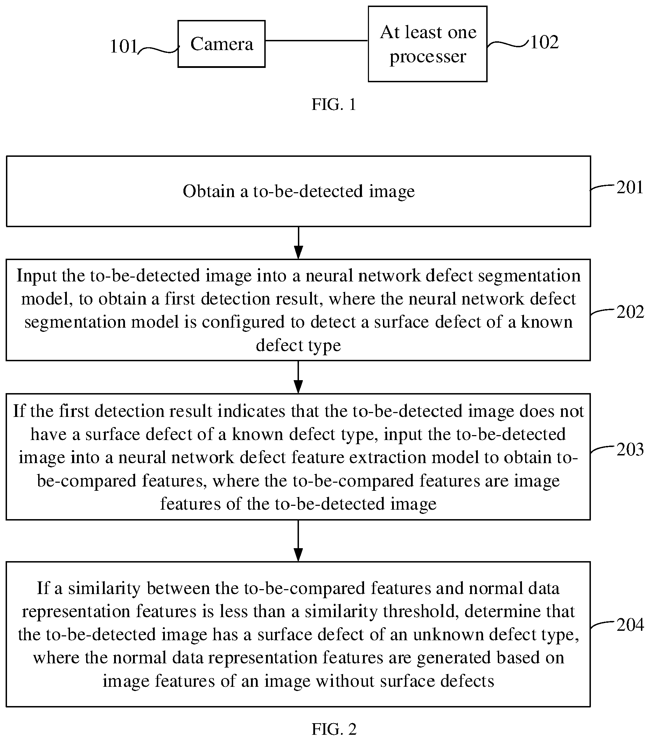

FIG. 1 is a system architecture diagram of a surface defect detection system according to an embodiment of the present disclosure. The surface defect detection system is configured to implement the surface defect detection method according to an embodiment of the present disclosure. Referring to FIG. 1, the system includes a camera 101 and at least one processor 102.

The at least one processor 102 is a processor in a computer device, and the camera 101 and the at least one processor 102 in the computer device are wirelessly or wiredly coupled for communication. The camera 101 is configured to capture an image of an object to be detected as a to-be-detected image, and send the image to the at least one processor 102. The computer device serves as a detection device to perform surface defect detection through the at least one processor 102.

In some embodiments, the at least one processor 102 is a processor in the camera 101. The camera 101 serves as a detection device to capture an image of an object to be detected as a to-be-detected image and perform surface defect detection.

In some embodiments, the system further includes a transfer device for transferring the object to be detected. In a scenario, during the process of transferring the object to be detected by the transfer device, the camera 101 captures the object to be detected, and detects a surface defect through a detection device. The transfer device includes a conveying belt, a transfer vehicle or a transport machine. The object to be detected includes a metal part, a glassware, a paper or other products produced by a factory. In this way, during the transfer of the object to be detected, an object with a surface defect is detected, that is, a defective product is detected to ensure product quality.

The surface defect detection method according to an embodiment of the present disclosure is described in detail below.

FIG. 2 is a flowchart of a surface defect detection method according to an embodiment of the present disclosure. The method is introduced by taking the method applied to surface defect detection device (abbreviated as detection device) as an example. Referring to FIG. 2, the method includes following steps.

In step 201, a to-be-detected image is obtained.

In an embodiment of the present disclosure, the detection device obtains a to-be-detected image, where the to-be-detected image refers to an image of an object that needs to be detected for surface defects, for example, an image of an object such as a tool, paper, or other objects produced industrially.

For example, the detection device stores a to-be-detected image, or the detection device receives a to-be-detected image sent by other devices. For example, an industrial camera sends a captured image of an object to the detection device, and the detection device takes the received image as a to-be-detected image.

In step 202, the to-be-detected image is input into a neural network defect segmentation model, and a first detection result is output, where the neural network defect segmentation model is configured to detect a surface defect of a known defect type.

In an embodiment of the present disclosure, a neural network defect segmentation model is deployed in the detection device. The neural network defect segmentation model is a deep learning model, and the neural network defect segmentation model is configured to detect a surface defect of a known defect type. The detection device inputs the to-be-detected image into the neural network defect segmentation model, to obtain the first detection result.

For example, assuming that the to-be-detected image has a surface defect of a known defect type, the first detection result indicates that the to-be-detected image has a surface defect of a known defect type. Assuming that the to-be-detected image does not have a surface defect of a known defect type, the first detection result indicates that the to-be-detected image does not have a surface defect of a known defect type.

In step 203, If the first detection result indicates that the to-be-detected image does not have a surface defect of a known defect type, the to-be-detected image is input into a neural network defect feature extraction model to obtain to-be-compared features, where the to-be-compared features are image features of the to-be-detected image.

In an embodiment of the present disclosure, a neural network defect feature extraction model is further deployed in the detection device. The neural network defect feature extraction model is a deep learning model, and the neural network defect feature extraction model is configured to extract image features. If the first detection result indicates that the to-be-detected image does not have a surface defect of a known defect type, the detection device input the to-be-detected image into a neural network defect feature extraction model to obtain to-be-compared features, where the to-be-compared features are image features of the to-be-detected image.

In step 204, If a similarity between the to-be-compared features and normal data representation features is less than a similarity threshold, it is determined that the to-be-detected image has a surface defect of an unknown defect type. The normal data representation features are generated based on image features of an image without surface defects.

In an embodiment of the present disclosure, the detection device stores the normal data representation features. The normal data representation features are generated based on image features of an image without surface defects. For example, the normal data representation features include image features obtained by processing an image without surface defects using a neural network defect feature extraction model. After extracting the to-be-compared features through a neural network defect feature extraction model, the detection device calculates the similarity between the to-be-compared features and the normal data representation features. If the similarity between the to-be-compared features and the normal data representation features is less than the similarity threshold, the detection device determines that the to-be-detected image has a surface defect of an unknown defect type.

There are many methods for calculating the similarity between the to-be-compared features and the normal data representation features, such as using Euclidean distance similarity calculation method between features, using Markov distance similarity calculation method between features, and using cosine distance similarity calculation method between features, which is not limited in the present disclosure.

In an embodiment of the present disclosure, the normal data representation features include image features of one or more images without surface defects. The detection device calculates the similarity between the to-be-compared features and image features of each of the one or more images without surface defects included in the normal data representation features, to obtain one or more similarities. If at least one of the one or more similarities is less than a first similarity threshold, the detection device determines that the to-be-detected image has a surface defect of an unknown defect type. Alternatively, if an average value of the one or more similarities is less than a second similarity threshold, the detection device determines that the to-be-detected image has a surface defect of an unknown defect type. The first similarity threshold and the second similarity threshold are the same or different.

In an embodiment of the present disclosure, if the similarity between the to-be-compared features and the normal data representation features is greater than or equal to the similarity threshold, the detection device determines that the to-be-detected image has no surface defects.

For example, the detection device calculates the similarity between the to-be-compared features and each image feature included in the normal data representation, obtaining one or more similarities. If the similarity is greater than or equal to the first similarity threshold, the detection device determines that the to-be-detected image has no surface defects. Alternatively, if the average value of one or more similarities is greater than or equal to the second similarity threshold, the detection device determines that the to-be-detected image has no surface defects.

In some embodiments, in an embodiment of the present disclosure, if the to-be-detected image has a surface defect of an unknown type, the detection device can further detect the location of the surface defect of the unknown type in the to-be-detected image, that is, detect and determine the location of the surface defect in the to-be-detected image.

In an embodiment of the present disclosure, the detection device determines a location of a defect of the to-be-detected image by comparing the to-be-compared features with the normal data representation features. For example, the detection device determines the position of the surface defect existing in the to-be-detected image according to a similarity between the to-be-compared features and the normal data representation features, and a mapping relationship between an image feature matrix and an image pixel matrix.

In an embodiment, a certain mapping relationship exists between the image feature matrix and the image pixel matrix. The image pixel matrix refers to a matrix composed of pixel values of an image, and the image feature matrix is obtained by downsampling the image pixel matrix through a neural network defect feature extraction model. In other words, the image features extracted by the neural network defect feature extraction model are represented as the image feature matrix in matrix form.

For example, assuming that the neural network defect feature extraction model according to embodiments of the present disclosure is constructed based on a convolutional neural network, the extracted image features include features of C channels, and the image pixel matrix is a matrix of 100 ^{∗} 100. Quadruple downsampling is performed on the image pixel matrix through the neural network defect feature extraction model to obtain a feature array of 25 ^{∗} 25 C-dimensional features in the image feature matrix, and the feature array is a third-order tensor, which can be understood that each position of the image feature matrix of 25 ^{∗} 25 is a C-dimensional vector, and each position corresponds to a 4 ^{∗} 4 region in the image pixel matrix. For example, a first position in a 25 * 25 image feature matrix corresponds to a first region of 4 * 4 in a 100 * 100 image pixel matrix. So, the similarity between the C-dimensional vector at each position in the 25 * 25 feature matrix to be compared and the corresponding C-dimensional vector in the 25 * 25 normal data feature matrix determines whether a surface defect exists in the corresponding region of 4 * 4 in the image pixel matrix.

The detection device calculates the similarity between elements at the same position in the feature matrix to be compared and the normal data feature matrix. If the similarity between elements at the same position is less than the similarity threshold, that is, the detection device detects a position of a defect feature. The position of the defect feature refers to the position in the feature matrix to be compared where the similarity of features is lower than the similarity threshold. Then, based on the mapping relationship between the image feature matrix and the image pixel matrix, the detection device determines a position of an image pixel corresponding to the position of the defect feature from the corresponding image pixel matrix of the image to be compared, as the position of the surface defect in the to-be-detected image. The feature matrix to be compared refers to an image feature matrix corresponding to the to-be-detected image, while the normal data feature matrix refers to an image feature matrix corresponding to the normal data representation features.

For example, assuming that the size of the image pixel matrix corresponding to the to-be-detected image is 100 * 100, and the feature matrix to be compared and the normal data feature matrix are both third-order tensors of 25 ^{∗} 25 C-dimensional features, the detection device calculates the similarity between the C-dimensional vector at the first position in the feature matrix to be compared and the C-dimensional vector at the first position in the normal data feature matrix. If the similarity is less than the similarity threshold, the detection device determines, based on the mapping relationship between the image feature matrix and the image pixel matrix, the image position of the first region of 4 ^{∗} 4 in the image pixel matrix corresponding to the to-be-detected image as the position of the defect.

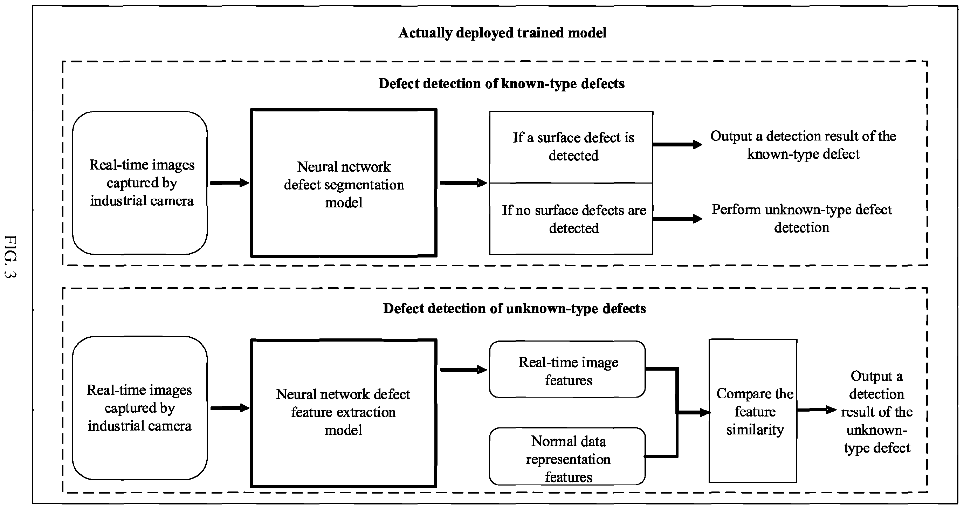

FIG. 3 is a flowchart of a surface defect detection method according to another embodiment of the present disclosure. As shown in FIG. 3, taking the to-be-detected image as a real-time image captured by an industrial camera as an example, the detection device has two functions of known-type defect detection and unknown-type defect detection. Trained models are deployed in the detection device, including a neural network defect segmentation model and a neural network defect feature extraction model. The neural network defect segmentation model is configured to achieve the function of known-type defect detection, that is, to detect a surface defect of a known type. The detection device further stores the normal data representation features. The neural network defect feature extraction model and the normal data representation features are combined to achieve the function of unknown-type defect detection, that is, to detect a surface defect of an unknown type.

The process of the known-type defect detection includes following steps. The detection device inputs a real-time image captured by an industrial camera into the neural network defect segmentation model; and if a surface defect is detected, outputs a detection result of the known-type defect, that is, outputs a type of the surface defect present in the to-be-detected image. If no surface defects are detected, unknown-type defect detection is performed.

The process of unknown-type defect detection includes following steps. the detection device inputs the real-time image captured by the industrial camera into the neural network defect feature extraction model, and outputs real-time image features, that is, outputs the image features of the to-be-detected image. Afterwards, the detection device compares the feature similarity between the real-time image features and the normal data representation features, and outputs a detection result of the unknown-type defect. For example, if the similarity between the real-time image features and the normal data representation features is less than the similarity threshold, the result indicates the unknown-type defect detection is that the image has a surface defect of an unknown type, and the location of the defect is marked on the image. If the similarity between the real-time image features and the normal data representation features is greater than or equal to the similarity threshold, the result of the unknown-type defect detection indicates that the image has no surface defects, that is, the image is a normal image without surface defects, and an object corresponding to the image is a normal object.

From the above, it can be seen that in the embodiments of the present disclosure, the detection device can preliminarily detect surface defects of known types through a neural network defect segmentation model, and further detect whether surface defects of unknown types exist in the to-be-detected image through a neural network defect feature extraction model and normal data representation features. That is, the embodiments of the present disclosure can effectively detect surface defects of unknown types, improving detection accuracy. And the embodiments of the present disclosure can detect both surface defects of known types and surface defects of unknown types, improving the practicality of defect detection.

The above introduces the process of detecting surface defects using detection device based on a detection model and normal data representation features. The detection model includes a neural network defect segmentation model and a neural network defect feature extraction model. It should be noted that in the embodiments of the present disclosure, the neural network defect segmentation model deployed in the detection device is a trained deep learning model. An implementation method for obtaining the trained neural network defect segmentation model is introduced below. It should be noted that a neural network defect segmentation model can be trained through the above detection device, or can be trained through other computer devices, which is not limited in the present disclosure.

In the embodiments of the present disclosure, taking the neural network defect segmentation model trained through the detection device as an example, the detection device obtains a first dataset, and trains the neural network defect segmentation model based on the first dataset. The first dataset includes one or more defect images of one or more known defect types and corresponding first label information. The first label information represents a type of a defect, the defect image refers to an image with one or more surface defects, the first dataset further includes an image without surface defects and corresponding second label information, and the second label information indicates absence of surface defects.

That is, the detection device obtains some defect images with known defect types, and some normal images without surface defects. The normal images refer to images without surface defects, and the known defect types are labelled in the defect images, to obtain the first label information corresponding to the defect images. The first label information is the corresponding defect types, and the normal images are labelled as no surface defects. It should be noted that the labelling process for the first dataset can be performed through the detection device or other computer devices, which is not limited in the present disclosure.

Assuming that the image size in the embodiments of the present disclosure is 100 * 100 pixels, and the label information corresponding to the defect image and the normal image is also represented by a 100 * 100 matrix. For example, a 100 ^{∗} 100 all-zero matrix representation indicates that there are no surface defects, that is, the 100 ^{∗} 100 all-zero matrix corresponding to the label information of the normal image, and the 100 ^{∗} 100 non-all-zero matrix indicates that there is a surface defect, that is, the label information of the defect image is a 100 ^{∗} 100 non-all-zero matrix. That is, in the embodiments of the present disclosure, an all-zero matrix of the same size as the image is used as the label information of the normal image, and a non-all-zero matrix of the same size as the image is used as the label information of the defect image.

In the non-all-zero matrix, different numerical values indicate different defect types. For example, a value of 1 indicates a first known-type defect, a value of 2 indicates a second known-type defect, and a value of 3 indicates the third known-type defect. In addition, a location of a non-zero element in a non-all-zero matrix are a local location in an image with surface defects. For example, the first row of elements in a non-all-zero matrix being non-zero indicates that there is a surface defect at the location of the first row of pixels in the image. Values of the first three elements in the first row of a non-all-zero matrix being 1 indicates that there is a first known-type defect in the position of the first three pixels in the first row of pixels in the image.

According to the above embodiments, alternatively, the first detection result is indicated by a matrix with the same size as the image, and the first detection result can be called the result matrix. After inputting the to-be-detected image into the neural network defect feature extraction model, the detection device outputs a result matrix with the same size as the image. According to the result matrix, the detection device can determine whether there is a surface defect of a known type in the to-be-detected image and where is the surface defect. For example, if the result matrix is a non-all-zero matrix, the detection device determines that there is a surface defect of a known type in the to-be-detected image, and determines the type and the location of the surface defect in the to-be-detected image based on the positions and values of the non-zero elements in the result matrix.

In the embodiments of the present disclosure, the neural network defect feature extraction model deployed in the detection device is also a trained deep learning model. An implementation method for obtaining the trained neural network defect feature extraction model is introduced below. It should be noted that the neural network defect feature extraction model can be trained through the above detection device, or can be trained through other computer devices, which is not limited in the present disclosure.

In the embodiments of the present disclosure, taking the neural network defect feature extraction model trained through the detection device as an example, the detection device obtains a second dataset, and trains the neural network defect feature extraction model based on the second dataset. The second dataset includes one or more images of one or more a known object type and corresponding third label information, and the third label information indicates an object type.

For example, the detection device obtains a large-scale publicly available dataset with class label annotations as the second dataset. Based on the second dataset containing a large amount of data, the neural network defect feature extraction model is trained. The richer the data contained in the second dataset, the better the performance of the trained neural network defect feature extraction model in extracting image features.

An implementation method for training through the detection device to obtain a neural network defect feature extraction model is described as follows. Firstly, the detection device constructs a neural network classification model based on a convolutional neural network. The constructed neural network classification model includes one or more convolutional layers, one or more pooling layers, one or more fully connected layers, one or more softmax layers, etc. The detection device trains a neural network classification model based on the second dataset, and the output of the trained neural network classification model indicates object types. Due to the neural network classification model calculating and extracting image features layer by layer during the forward propagation process, and finally outputting object types through the fully connected layer and the softmax layer, in order to obtain a neural network defect feature extraction model that can output image features, the detection device removes the last fully connected layer and softmax layer of the trained neural network classification model, to obtain a neural network defect feature extraction model that can output image features.

It should be noted that the embodiments of the present disclosure do not limit the deep learning technology, deep learning framework, etc. used to construct a neural network defect feature extraction model.

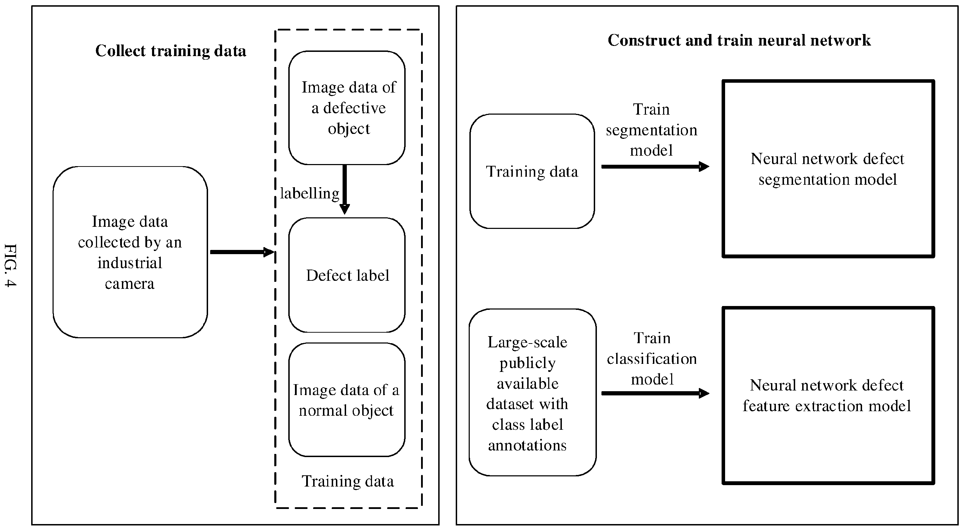

FIG. 4 is a schematic diagram of a detection model training method according to an embodiment of the present disclosure. The detection model includes a neural network segmentation model and a neural network defect feature extraction model. As shown in FIG. 4, the training process of the detection model includes collecting training data, constructing and training a neural network.

The process of collecting training data includes following steps. An industrial camera sends the collected image data to a computer device. The computer device is the detection device. Through the detection device, defect labels are labelled on the image data of defective objects, that is, defect images with known types are labelled, and the corresponding label information of the defect images is obtained. The label information indicates the corresponding defect types. Through the detection device, the image data of normal objects is labelled as no surface defects, that is, normal images without surface defects are labelled, to obtain the corresponding label information for the normal images, and the label information indicates no surface defects.

The process of constructing and training a neural network involves following steps. through the detection device, a segmentation model (initialized neural network defect segmentation model) is constructed, and the segmentation model is trained based on training data collected by an industrial camera, to obtain a trained neural network defect segmentation model. Through detection device, a classification model (initialized neural network classification model) is constructed, and the classification model is trained based on a large-scale publicly available dataset with class label annotations, to obtain a trained neural network defect feature extraction model.

Two implementation methods for the detection device determining the normal data representation features are introduced as follows.

In the first implementation method, the detection device obtains at least one first sample image without surface defects. The detection device inputs the at least one first sample image into the neural network defect feature extraction model, to obtain the image features of the at least one first sample image. The detection device uses the image features of the at least one first sample image as the normal data representation features.

That is, the detection device obtains image data of some normal objects, extracts the image features of these image data through a neural network defect feature extraction model, and takes the extracted image features as normal data representation features.

As an example, it can be seen from the above that the first dataset includes normal images without surface defects. Therefore, the detection device can obtain at least one normal image from the first dataset as at least one first sample image. For example, the detection device randomly selects a certain proportion or number of images from the normal images included in the first dataset as at least one first sample image, or the detection device takes all the normal images included in the first dataset as first sample images.

That is, the detection device first selects normal images that need to extract image features from the first dataset, and then extracts image features from the selected normal images, and uses the extracted image features as normal data representation features.

In some embodiments, the detection device inputs all normal images included in the first dataset into the neural network defect feature extraction model, to obtain image features of all normal images included in the first dataset. Afterwards, the detection device randomly selects a certain proportion or number of image features from the image features of all normal images included in the first dataset as the normal data representation features, or the detection device takes image features of all normal images included in the first dataset as the normal data representation features.

That is, the detection device first extracts image features from all normal images included in the first dataset, and then randomly selects a certain proportion or all of the extracted image features as the normal data representation features.

In the second implementation method, the detection device obtains multiple second sample images without surface defects. The detection device inputs the multiple second sample images into the neural network defect feature extraction model, to obtain the image features of the multiple second sample images. The detection device clusters the image features of the multiple second sample images to obtain multiple sets of normal data features, then selects at least one image feature from each set of normal data features of the multiple sets of normal data features, to obtain the normal data representation features.

That is, the detection device obtains image data of some normal objects, extracts image features of these image data through a neural network defect feature extraction model, clusters the extracted image features, to obtain multiple sets of normal data features, and selects a certain proportion or number of image features from each set of normal data features as the normal data representation features. In this way, the normal data representation features obtained by the detection device are diverse and more representative.

As an example, it can be seen from the above that the first dataset includes normal images without surface defects. Therefore, the detection device can take all normal images included in the first dataset as multiple second sample images, extract image features from these multiple second sample images, and cluster all extracted image features, to obtain multiple sets of normal representation features. The detection device then selects a certain number or proportion of image features from each set of normal data features as the normal data representation features.

Of course, the detection device can also first select a certain proportion or number of normal images from the first dataset as multiple second sample images, and then perform feature extraction, clustering and selecting, to obtain the normal data representation features.

From the above introduction of the first and second implementation methods for determining the normal data representation features, it can be inferred that if the detection device determines the normal data representation features based on the normal images included in the first dataset, the detection device can first extract image features from all normal images included in the first dataset, and then, based on a selecting mechanism, select and determine the normal data representation features from all extracted image features. The selecting mechanism is to randomly select a certain proportion or number of image features, to select all image features, or to cluster all image features and select a certain proportion or number of image features from each type of image features.

It should be noted that there are many clustering algorithms used by the detection device to cluster image features, such as K-means clustering algorithm, mean shift clustering algorithm, density-based clustering algorithm, hierarchical clustering algorithm, etc. The embodiments of the present disclosure do not limit this.

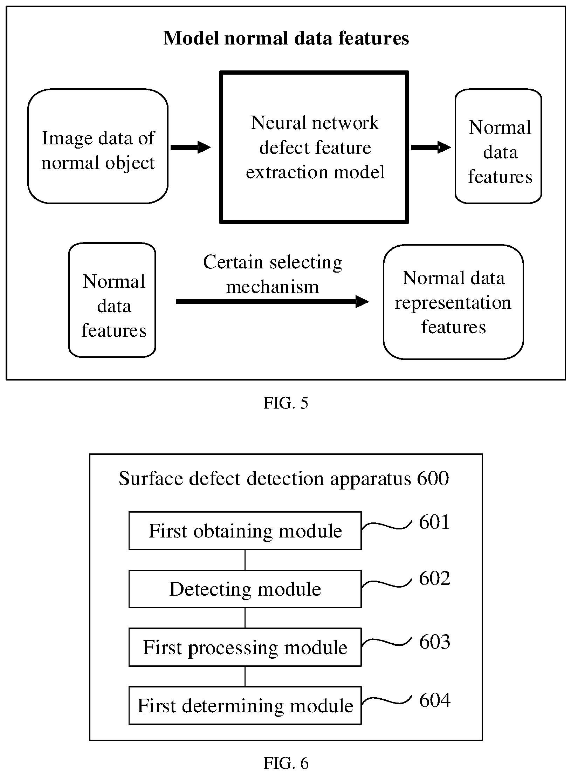

In the embodiments of the present disclosure, the process of determining the normal data representation features by the detection device can be understood as the process of modelling normal data features. FIG. 5 is a schematic diagram of a normal data feature modelling method according to an embodiment of the present disclosure. The process is further explained with reference to FIG. 5.

As shown in FIG. 5, the detection device inputs image data of normal objects into the neural network defect feature extraction model, to obtain normal data features. For example, all normal images included in the first dataset are input into the neural network defect feature extraction model, to obtain the image features of all normal images. Afterwards, the detection device selects a selecting mechanism to select the normal data representation features from normal data features.

In summary, in the embodiments of the present disclosure, if it is detected and determined through a neural network defect segmentation model that there are no surface defects of known types in the to-be-detected image, the image features of the to-be-detected image is extracted through the neural network defect feature extraction model, to obtain the to-be-compared features. If the similarity between the to-be-compared features and the normal data representation features is small, it is determined that there is a surface defect of an unknown type in the to-be-detected image, that is, the embodiments of the present disclosure can detect surface defects of unknown defect types, improving the accuracy of detection.

All the above optional technical solutions can be combined in any way to form optional embodiments of the present disclosure, which will not be repeated in the embodiments of the present disclosure.

FIG. 6 is a structural schematic diagram of a surface defect detection apparatus 600 according to an embodiment of the present disclosure. The surface defect detection apparatus 600 can be implemented as part or all of a computer device by software, hardware, or a combination of both. The computer device can be the detection device in the above embodiments. Referring to FIG. 6, the apparatus 600 includes a first obtaining module 601, a detecting module 602, a first processing module 603, and a first determining module 604.

The first obtaining module 601 is configured to obtain a to-be-detected image.

The detecting module 602 is configured to input the to-be-detected image into a neural network defect segmentation model, to obtain a first detection result, where the neural network defect segmentation model is configured to detect a surface defect of a known defect type.

The first processing module 603 is configured to, in response to determining that the first detection result indicates that the to-be-detected image does not have a surface defect of the known defect type, input the to-be-detected image into a neural network defect feature extraction model, to obtain to-be-compared features, where the to-be-compared features are image features of the to-be-detected image.

The first determining module 604 is configured to, in response to determining that a similarity between the to-be-compared features and normal data representation features is less than a similarity threshold, determine that the to-be-detected image has a surface defect of an unknown defect type, where the normal data representation features are generated based on image features of an image without surface defects.

In some embodiments, the apparatus 600 further includes:

a second determining module, configured to, according to the similarity between the to-be-compared features and the normal data representation features and a mapping relationship between an image feature matrix and an image pixel matrix, determine a location of the surface defect present in the to-be-detected image.

In some embodiments, the apparatus 600 further includes:
a second obtaining module, configured to obtain a first dataset, where the first dataset includes a defective image of a known defect type and corresponding first label information, the first label information indicates a defect type, the first dataset further includes an image without surface defects and corresponding second label information, and the second label information indicates absence of surface defects; and
a first training module, configured to, according to the first dataset, train the neural network defect segmentation model.

In some embodiments, the apparatus further includes:
a third obtaining module, configured to obtain a second dataset, where the second dataset includes images of known object types and corresponding third label information, and the third label information indicates types of objects; and
a second training module, configured to train a neural network defect feature extraction model based on the second dataset.

In some embodiments, the apparatus 600 further includes:
a fourth obtaining module, configured to obtain at least one first sample image without surface defects;
a second processing module, configured to input the at least one first sample image into the neural network defect feature extraction model, to obtain image features of the at least one first sample image; and
a third determining module, configured to determine the image features of the at least one first sample image as the normal data representation features.

In some embodiments, the apparatus 600 further includes:
a fifth obtaining module, configured to obtain multiple second sample images, where the multiple second images have no surface defects;
a third processing module, configured to input the multiple second sample image into the neural network defect feature extraction model, to obtain image features of the multiple second sample image;
a clustering module, configured to cluster the image features of the multiple second sample images, to obtain multiple sets of normal data features; and
a fourth determining module, configured to select at least one image feature from each set of normal data features of the multiple sets of normal data features, to obtain the normal data representation features.

In some embodiments, the apparatus 600 further includes:
a fifth determining module, configured to, in response to determining that the similarity between the to-be-compared features and normal data representation features is greater than or equal to the similarity threshold, determine that the to-be-detected image has no surface defects.

In the embodiments of the present disclosure, if it is detected and determined through a neural network defect segmentation model that there are no surface defects of known types in the to-be-detected image, the image features of the to-be-detected image is extracted through the neural network defect feature extraction model, to obtain the to-be-compared features. If the similarity between the to-be-compared features and the normal data representation features is small, it is determined that there is a surface defect of an unknown type in the to-be-detected image, that is, the embodiments of the present disclosure can detect surface defects of unknown defect types, improving the accuracy of detection.

It should be noted that when the surface defect detection apparatus provided in the above-mentioned embodiments detects surface defects, it is only illustrated by the division of the above functional modules. In practical applications, the above-mentioned functions can be completed by different functional modules according to needs, that is, the internal structure of an apparatus is divided into different functional modules, so as to complete all or part of the above functions. In addition, the embodiments for the surface defect detection apparatus and the embodiments for the surface defect detection method provided by the present disclosure belong to the same concept, and the specific implementation process is detailed in the method embodiments, which will not be repeated here.

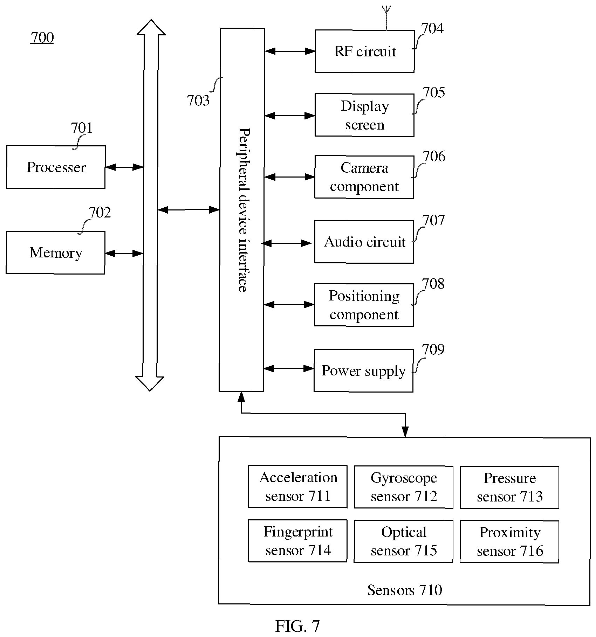

FIG. 7 illustrates a structural block diagram of a terminal 700 according to an embodiment of the present disclosure. The terminal 700 can be a smartphone, tablet, laptop, or desktop computer. The terminal 700 may also be referred to as user device, portable terminal, laptop terminal, desktop terminal, or other names. In some embodiments, the terminal 700 is a detection device in the above embodiments.

Typically, the terminal 700 includes a processor 701 and a memory 702.

The processor 701 may include one or more processing cores, such as a 4-core processor, an 8-core processor, etc. The processor 701 can be implemented in at least one hardware form of DSP (Digital Signal Processing), FPGA (Field Programmable Gate Array), or PLA (Programmable Logic Array). The processor 701 can further include a main processor and a coprocessor. The main processor is configured to process data in a wake-up state, also known as a Central Processing Unit (CPU). The coprocessor is a low-power processor configured to process data in standby mode. In some embodiments, the processor 701 may be integrated with a GPU (Graphics Processing Unit), which is responsible for rendering the content that needs to be displayed on a display screen. In some embodiments, the processor 701 may further include an AI (Artificial Intelligence) processor for processing computational operations related to machine learning.

The memory 702 may include one or more computer-readable storage media, which may be non-transient. The memory 702 may further include high-speed random-access memory and non-volatile memory, such as one or more disk storage devices, flash memory storage devices. In some embodiments, a non-transient computer-readable storage medium in the memory 702 is configured to store at least one instruction, which is executed by processor 701 to implement the surface defect detection method provided in the method embodiments of the present disclosure.

In some embodiments, the terminal 700 may further include a peripheral device interface 703 and at least one peripheral device. The processor 701, the memory 702, and the peripheral device interface 703 can be coupled through a bus or signal line. Each peripheral device can be coupled to the peripheral device interface 703 through a bus, signal line, or circuit board. Specifically, the at least one peripheral device includes at least one of a radio frequency circuit 704, a display screen 705, a camera component 706, an audio circuit 707, a positioning component 708, or a power supply 709.

The peripheral device interface 703 can be configured to connect at least one peripheral device related to I/O (Input/Output) to the processor 701 and the memory 702. In some embodiments, the processor 701, the memory 702, and the peripheral device interface 703 are integrated on the same chip or circuit board. In some other embodiments, any one or two of the processor 701, the memory 702 or the peripheral device interface 703 can be implemented on a separate chip or circuit board, which is not limited in the present disclosure.

RF (Radio Frequency) circuit 704 is configured to receive and transmit RF signals, also known as electromagnetic signals. RF circuit 704 communicates with a communication network and other communication devices through electromagnetic signals. The RF circuit 704 converts electrical signals into electromagnetic signals for transmission, or converts the received electromagnetic signals into electrical signals. In some embodiments, the RF circuit 704 includes an antenna system, an RF transceiver, one or more amplifiers, a tuner, an oscillator, a digital signal processor, an encoding and decoding chipset, a user identity module card, and the like. The RF circuit 704 can communicate with other terminals through at least one wireless communication protocol. This wireless communication protocol includes but is not limited to: metropolitan area networks, various generations of mobile communication networks (2G, 3G, 4G, or 5G), wireless local area networks, and/or Wi-Fi (wireless fidelity) networks. In some embodiments, the RF circuit 704 may further include circuits related to NFC (Near Field Communication), which is not limited in the present disclosure.

Display screen 705 is configured to display the UI (User Interface). The UI can include graphics, text, icons, videos, and any combination of them. When the display screen 705 is a touch screen, the display screen 705 further includes the ability to collect a touch signal on or above the surface of the display screen 705. The touch signal can be input as a control signal to the processor 701 for processing. In this case, the display screen 705 can further be configured to provide a virtual button and/or a virtual keyboard, also known as a soft button and/or a soft keyboard. In some embodiments, the display screen 705 can be one, located on a front panel of the terminal 700. In other embodiments, the display screen 705 can be at least two, respectively arranged on different surfaces of the terminal 700 or in a folded design. In other embodiments, the display screen 705 may be a flexible display screen arranged on a curved or folded surface of the terminal 700. Even, the display screen 705 can be set as a non-rectangular irregular shape, also known as an irregular screen. The display screen 705 can be prepared using materials such as LCD (Liquid Crystal Display) and OLED (Organic Light Emitting Diode).

Camera component 706 is configured to capture an image or a video. In some embodiments, the camera component 706 includes a front camera and a rear camera. Usually, the front camera is set on the front panel of the terminal, and the rear camera is set on the back of the terminal. In some embodiments, there are at least two rear cameras, including any two of a main camera, a depth-of-field camera, a wide-angle camera or a telephoto camera, so as to realize the combination of the main camera and the depth-of-field camera to realize the background blur function, the combination of the main camera and the wide-angle camera to realize a panoramic shooting, a VR (Virtual Reality) shooting or other fusion shooting functions. In some embodiments, the camera component 706 may further include a flash. The flash can be a single-color temperature flash or a dual-color temperature flash. Dual-color temperature flash refers to a combination of warm light flash and cold light flash, which can be used for light compensation at different color temperatures.

Audio circuit 707 can include a microphone and a speaker. The microphone is configured to collect sound waves from a user and the environment, and convert the sound waves into electrical signals and input them to processor 701 for processing, or input them to RF circuit 704 for voice communication. For the purpose of stereo acquisition or noise reduction, microphones can be multiple, and each microphone is set at a different part of the terminal 700. The microphone can further be an array microphone or an omnidirectional acquisition microphone. The speaker is configured to convert electrical signals from processor 701 or RF circuit 704 into sound waves. The speaker can be a traditional thin film speaker or a piezoelectric ceramic speaker. When the speaker is a piezoelectric ceramic speaker, it can not only convert electrical signals into sound waves that can be heard by humans, but also convert electrical signals into sound waves that cannot be heard by humans for distance measurement and other purposes. In some embodiments, the audio circuit 707 may further include a headphone jack.

The positioning component 708 is configured to locate the current geographic location of the terminal 700 for navigation or LBS (Location Based Service). The positioning component 708 can be based on the Global Positioning System (GPS) of the United States, the Beidou system of China, the GLONASS system of Russia, or the Galileo system of the European Union.

The power supply 709 is configured to supply power to various components in the terminal 700. The power supply 709 can be AC, DC, disposable battery, or rechargeable battery. When the power supply 709 includes a rechargeable battery, the rechargeable battery can support wired or wireless charging. This rechargeable battery can further be configured to support fast charging technology.

In some embodiments, the terminal 700 further includes one or more sensors 710. The one or more sensors 710 include at least one of but are not limited to: acceleration sensor 711, gyroscope sensor 712, pressure sensor 713, fingerprint sensor 714, optical sensor 715, or proximity sensor 716.

The acceleration sensor 711 can detect the magnitude of acceleration on the three coordinate axes of the coordinate system established by the terminal 700. For example, the acceleration sensor 711 can be configured to detect the components of gravitational acceleration on three coordinate axes. The processor 701 can control the display screen 705 to display the user interface in a horizontal or vertical view based on the gravity acceleration signal collected by the acceleration sensor 711. The acceleration sensor 711 can further be configured to collect motion data for games or users.

The gyroscope sensor 712 can detect the direction and rotation angle of the terminal 700, and the gyroscope sensor 712 can collaborate with the acceleration sensor 711 to collect 3D actions of the user on the terminal 700. The processor 701 can achieve the following functions based on the data collected by the gyroscope sensor 712: motion sensing (such as changing the UI based on the tilt operation by the user), image stabilization during shooting, game control, and inertial navigation.

The pressure sensor 713 can be installed on a side frame of the terminal 700 and/or a lower layer of the display screen 705. When the pressure sensor 713 is set on the side frame of the terminal 700, it can detect the grip signal from the user on the terminal 700, and the processor 701 can recognize the left hand or the right hand, or perform quick operation based on the grip signal collected by the pressure sensor 713. When the pressure sensor 713 is set at the lower layer of the display screen 705, the processor 701 controls the operability controls on the UI interface based on the user's pressure operation on the display screen 705. Operability controls include at least one of button controls, scroll bar controls, icon controls, and menu controls.

The fingerprint sensor 714 is configured to collect the user's fingerprint, and the processor 701 recognizes the identity of the user according to the fingerprint collected by the fingerprint sensor 714, or the fingerprint sensor 714 recognizes the user's identity according to the collected fingerprint. When the user's identity is recognized as a trusted identity, the processor 701 authorizes the user to perform relevant sensitive operations, including unlocking the screen, viewing encrypted information, downloading software, paying, and changing settings. The fingerprint sensor 714 can be set on the front, back, or side of terminal 700. When a physical button or a manufacturer logo is installed on the terminal 700, the fingerprint sensor 714 can be integrated with the physical button or the manufacturer logo.

The optical sensor 715 is configured to collect ambient light intensity. In one embodiment, the processor 701 can control the display brightness of the display screen 705 based on the ambient light intensity collected by the optical sensor 715. Specifically, when the ambient light intensity is high, increase the display brightness of the display screen 705; When the ambient light intensity is low, lower the display brightness of the display screen 705. In another embodiment, the processor 701 can further dynamically adjust the shooting parameters of the camera component 706 based on the ambient light intensity collected by the optical sensor 715.

The proximity sensor 716, also known as distance sensor, is typically located on the front panel of the terminal 700. The proximity sensor 716 is configured to collect the distance between the user and the front of the terminal 700. In some embodiments, when the proximity sensor 716 detects that the distance between the user and the front of the terminal 700 gradually decreases, the processor 701 controls the display screen 705 to switch from a bright screen state to a resting screen state; When the proximity sensor 716 detects that the distance between the user and the front of the terminal 700 is gradually increasing, the processor 701 controls the display screen 705 to switch from a resting screen state to a bright screen state.

Those skilled in the art can understand that the structure shown in FIG. 7 does not constitute a limitation on the terminal 700, and can include more or fewer components than shown, or combine certain components, or adopt different component arrangements.

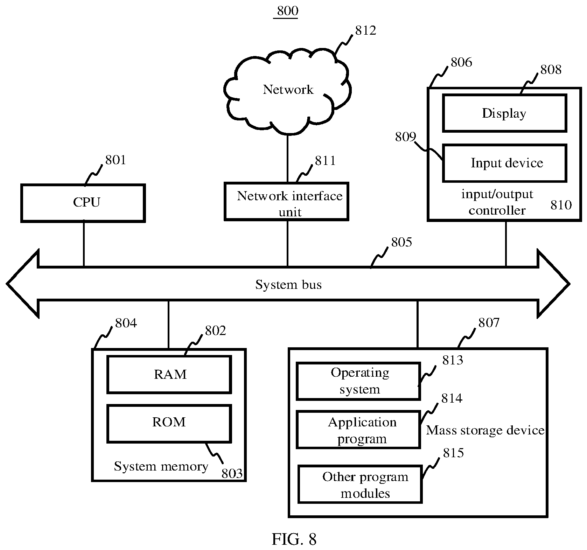

FIG. 8 is a structural schematic diagram of a server for a surface defect detection apparatus according to an embodiment. The server 800 can be a server in the backend server cluster, and the server 800 can be the detection device in the above embodiments. Specifically,

The server 800 includes a central processing unit (CPU) 801, a system memory 804 including random access memory (RAM) 802 and read-only memory (ROM) 803, and a system bus 805 connecting system memory 804 and central processing unit 801. The server 800 further includes a basic input/output system (I/O system) 806 that helps transmit information between various devices within the computer, and a mass storage device 807 for storing operating systems 813, application programs 814, and other program modules 815.

The basic input/output system 806 includes a display 808 for displaying information and an input device 809 such as a mouse or keyboard for user inputting information. The display 808 and input device 809 are both connected to the central processing unit 801 through an input/output controller 810 connected to the system bus 805. The basic input/output system 806 may further include an input/output controller 810 for receiving and processing inputs from multiple other devices such as a keyboard, mouse, or electronic stylus. Similarly, the input/output controller 810 further provides output to display screens, printers, and the like.

The mass storage device 807 is connected to central processing unit 801 through a mass storage controller (not shown) connected to the system bus 805. The mass storage device 807 and its associated computer-readable medium provide a non-volatile storage for the server 800. That is, the mass storage device 807 can include a computer-readable medium such as a hard drive or a CD-ROM drive (not shown).

Without loss of generality, a computer-readable medium may include a computer storage medium and a communication medium. The computer storage medium includes volatile and non-volatile, and removable and non-removable media implemented in any method or technology for storage of information such as computer-readable instructions, data structures, program modules or other data. The computer storage medium includes RAM, ROM, EPROM, EEPROM, flash memory, or other solid-state storage technologies, CD-ROM, DVD, or other optical storage, or magnetic tape cartridge, magnetic tape, disk storage, or other magnetic storage devices. Those skilled in the art know that the computer storage medium is not limited to the above-mentioned ones. The system memory 804 and the mass storage device 807 mentioned above can be collectively referred to as memory.

According to various embodiments of the present disclosure, the server 800 can further be connected to a remote computer on the network for operation through a network such as the Internet. That is, the server 800 can be connected to network 812 through a network interface unit 811 connected to the system bus 805, or the server 800 can also be connected to other types of networks or remote computer systems (not shown) using the network interface unit 811.

The above memory further includes one or more programs, which are stored in the memory and configured to be executed by the CPU. The one or more programs include instructions for conducting the surface defect detection method provided in the embodiments of the present disclosure.

In some embodiments, a computer-readable storage medium is further provided, and a computer program is stored in the storage medium, and when the computer program is executed by a processor, the steps of the method for detecting surface defects in the above-mentioned embodiments are implemented. For example, the computer-readable storage medium can be ROM, RAM, CD-ROM, magnetic tape, floppy disk, optical data storage device, etc.

It should be noted that the computer-readable storage medium mentioned in the embodiments of the present disclosure may be a non-volatile storage medium, in other words, may be a non-transitory storage medium.

It should be understood that all or part of the steps in the above embodiments can be achieved through software, hardware, firmware, or any combination thereof. When implemented using software, all or part of the steps can be implemented in the form of a computer program product. The computer program product includes one or more computer instructions. The computer instructions can be stored in the computer-readable storage medium mentioned above.

That is, in some embodiments, a computer program product containing instructions is further provided, which, when run on a computer, cause the computer to execute the steps of the above-mentioned surface defect detection method.

It should be understood that "at least one" mentioned in the present disclosure refers to one or more, and "multiple" refers to two or more. In the description of the embodiments of the present disclosure, unless otherwise specified, "/" represents or, for example, A/B can represent A or B; The term 'and/or' in this article is only a description of the association relationship of associated objects, indicating that there can be three types of relationships, such as, A and/or B can represent three situations of A alone, A and B simultaneously, and B alone. In addition, in order to facilitate a clear description of the technical solution of the embodiments of the present disclosure, the words "first", "second", etc. are used to distinguish the same or similar items with basically the same function in the embodiments of the present disclosure. Those skilled in the art can understand that words such as "first" and "second" do not limit the number and execution order, and words such as "first" and "second" do not necessarily limit the difference.

The above embodiments provided in the present disclosure are not intended to limit the present disclosure. Any modifications, equivalent replacements, improvements, etc. made within the spirit and principles of the present disclosure shall be included in the scope of protection of the present disclosure.

## Claims

1. A surface defect detection method, comprising:
obtaining a to-be-detected image;
inputting the to-be-detected image into a neural network defect segmentation model, to obtain a first detection result, wherein the neural network defect segmentation model is configured to detect a surface defect of a known defect type;
in response to determining that the first detection result indicates that the to-be-detected image does not have a surface defect of the known defect type, inputting the to-be-detected image into a neural network defect feature extraction model, to obtain to-be-compared features, wherein the to-be-compared features are image features of the to-be-detected image; and
in response to determining that a similarity between the to-be-compared features and normal data representation features is less than a similarity threshold, determining that the to-be-detected image has a surface defect of an unknown defect type, wherein the normal data representation features are generated based on image features of an image without surface defects.

2. The method according to claim 1, wherein after determining that the to-be-detected image has a surface defect of the unknown defect type, the method further comprises:
according to the similarity between the to-be-compared features and the normal data representation features and a mapping relationship between an image feature matrix and an image pixel matrix, determining a location of the surface defect present in the to-be-detected image.

3. The method according to claim 1, wherein before inputting the to-be-detected image into the neural network defect segmentation model, to obtain the first detection result, the method further comprises:
obtaining a first dataset, wherein the first dataset comprises an defective image of an known defect type and corresponding first label information, the first label information indicates a defect type, the first dataset further comprises an image without surface defects and corresponding second label information, and the second label information indicates absence of surface defects; and
according to the first dataset, training the neural network defect segmentation model.

4. The method according to claim 1, wherein before inputting the to-be-detected image into the neural network defect feature extraction model, to obtain the to-be-compared features, the method further comprises:
obtaining a second dataset, wherein the second dataset comprises an image of a known object type and corresponding third label information, and the third label information indicates an object type; and
according to the second dataset, training the neural network defect feature extraction model.

5. The method according to any one of claims 1-4, wherein before, in response to determining that the similarity between the to-be-compared features and the normal data representation features is less than the similarity threshold, determining that the to-be-detected image has the surface defect of the unknown defect type, the method further comprises:
obtaining at least one first sample image, wherein the at least one first sample image has no surface defects;
inputting the at least one first sample image into the neural network defect feature extraction model, to obtain image features of the at least one first sample image; and
taking the image features of the at least one first sample image as the normal data representation features.

6. The method according to any one of claims 1-4, wherein before, in response to determining that the similarity between the to-be-compared features and the normal data representation features is less than the similarity threshold, determining that the to-be-detected image has the surface defect of the unknown defect type, the method further comprises:
obtaining multiple second sample images, wherein the multiple second images have no surface defects;
inputting the multiple second sample image into the neural network defect feature extraction model, to obtain image features of the multiple second sample image;
clustering the image features of the multiple second sample images, to obtain multiple sets of normal data features; and
selecting at least one image feature from each of the multiple sets of normal data features, to obtain the normal data representation features.

7. The method according to any one of claims 1-4, wherein after inputting the to-be-detected image into the neural network defect feature extraction model, to obtain the to-be-compared features, the method further comprises:
in response to determining that the similarity between the to-be-compared features and the normal data representation features is greater than or equal to the similarity threshold, determining that the to-be-detected image has no surface defects.

8. A surface defect detection apparatus, comprising:
a first obtaining module, configured to obtain a to-be-detected image;
a detecting module, configured to input the to-be-detected image into a neural network defect segmentation model, to obtain a first detection result, wherein the neural network defect segmentation model is configured to detect a surface defect of a known defect type;
a first processing module, configured to, in response to determining that the first detection result indicates that the to-be-detected image does not have a surface defect of the known defect type, input the to-be-detected image into a neural network defect feature extraction model, to obtain to-be-compared features, wherein the to-be-compared features are image features of the to-be-detected image; and
a first determining module, configured to, in response to determining that a similarity between the to-be-compared features and normal data representation features is less than a similarity threshold, determine that the to-be-detected image has a surface defect of an unknown defect type, wherein the normal data representation features are generated based on image features of an image without surface defects.

9. The apparatus according to claim 8, further comprising:
a second determining module, configured to, according to the similarity between the to-be-compared features and the normal data representation features and a mapping relationship between an image feature matrix and an image pixel matrix, determine a location of the surface defect present in the to-be-detected image.

10. The apparatus according to claim 8, further comprising:
a second obtaining module, configured to obtain a first dataset, wherein the first dataset comprises an defective image of an known defect type and corresponding first label information, the first label information indicates a defect type, the first dataset further comprises an image without surface defects and corresponding second label information, and the second label information indicates absence of surface defects; and
a first training module, configured to, according to the first dataset, train the neural network defect segmentation model.

11. A surface defect detection system, comprising a camera and at least one processor, wherein
the camera is configured to capture at least one surface of an object to be detected, to obtain a to-be-detected image; and
the at least one processor is configured to obtain the to-be-detected image and implement steps of the method described in any one of claims 1-7.

12. The system according to claim 11, further comprising a transfer device for transferring the object to be detected, wherein the camera is configured to capture the object to be detected during a process of the object to be detected being transferred by the transfer device.

13. A computer-readable storage medium, wherein a computer program is stored within the computer-readable storage medium, and the computer program when executed by a processor implements steps of the method according to any one of claims 1 to 7.

14. A computer program product, comprising computer instructions, wherein the computer instructions when operating on a computer, implement steps of the method according to any one of claims 1 to 7.
